# EUROPÄISCHE PATENTANMELDUNG

(11) **EP 2 664 297 A1**
(43) Veröffentlichungstag der Anmeldung: **20.11.2013**
(21) Anmeldenummer: 12168124.1
(22) Anmeldetag: 15.05.2012
(51) Int. Cl.: A61C 13/265

(54) **Verbindungssatz, Patrizenteil und Matrizenteil zur lösbaren Befestigung eines Zahnersatzes**

(71) Anmelder: Cendres + Métaux SA, 2504 Biel (CH)
(72) Erfinder: Fäh, Mathias, 4500 Solothurn (CH); Strazza, Mathias, 2554 Meinisberg (CH); Walther, Matthias, 4142 Münchenstein (CH)
(74) Vertreter: AMMANN PATENTANWÄLTE AG BERN

(57) **Zusammenfassung**

Der Verbindungssatz zur lösbaren Befestigung eines abnehmbaren Zahnersatzes in einem Mund umfasst ein Patrizenteil (1) mit einer Längsachse (X) und ein am Zahnersatz befestigbares Matrizenteil (20, 30). Im verbundenen Zustand berühren sich die Verbindungselemente (6) des Patrizenteils (1) und der Verbindungsbereich (36) des Matrizenteils (20) an Kontaktstellen, welche voneinander beabstandet um die Längsachse (X) herum angeordnet und derart ausgestaltet sind, dass eine Haltekraft erzeugbar ist, die einem Trennen des Matrizenteils vom Patrizenteil entgegenwirkt. Patrizenteil (1) und Matrizenteil (20) sind auch einzeln bereitstellbar.

## Beschreibung

Die vorliegende Erfindung bezieht sich auf einen Verbindungssatz, ein Patrizenteil sowie ein Matrizenteil zur lösbaren Befestigung eines abnehmbaren Zahnersatzes in einem Mund.

Verbindungen aus Matrizenteil und Patrizenteil dienen dazu, einen Zahnersatz, beispielsweise eine Prothese, so anzubringen, dass er im üblichen Gebrauch sicher gehalten ist, jedoch bei Bedarf aus dem Mund herausgenommen und wieder eingesetzt werden kann.

Aus der WO 2010/025034 A1 ist eine lösbare Verbindung bekannt, bei welcher der Kopf eines Implantats als Patrizenteil dient und das Matrizenteil in Form einer Kappe mit einem Retentionselement ausgebildet ist. Das Patrizenteil weist einen runden, rotationssymmetrischen Patrizenkopf auf, dessen Form nach aussen gekrümmt ist. Das Retentionselement des Matrizenteils ist als Ring und demnach in Umfangsrichtung rotationssymmetrisch und geschlossen ausgebildet, so dass es als Ganzes nach aussen gedehnt wird, wenn es auf den Patrizenkopf aufgesetzt wird. Um ein auf dem Patrizenkopf aufgesetztes Matrizenteil zu entfernen, ist an diesem so zu ziehen, dass der Rand des Matrizenteils auseinandergedrückt wird und über die breiteste Stelle des Patrizenkopfs hinweg bewegt werden kann. Dies geht am einfachsten, wenn in Richtung der Implantatachse gezogen wird. Die Stärke der Trennkraft, die zum Trennen des Matrizenteils vom Patrizenkopf benötigt wird, ist in der Regel auf diese Situation ausgelegt. Oft jedoch ist das Implantat nicht in der Idealrichtung im Mund angebracht. In diesen Fällen ist die Ziehrichtung unter einem Winkel zur Implantatachse angeordnet (auch "Divergenz" genannt), so dass der Rand des Matrizenteils nur einseitig auseinandergedrückt wird und dieses nur erschwert über die breiteste Stelle des Patrizenkopfs bewegt werden kann. Dadurch ist eine höhere Trennkraft erforderlich, als sie eigentlich für die Verbindung ausgelegt ist. Insgesamt hat die rotationssymmetrische Formgebung beider Verbindungsteile den Nachteil, dass zum Herstellen und Trennen der Verbindung immer der gesamte Ring ausgedehnt werden muss und dass besonders bei Implantaten, die eine Divergenz aufweisen, nebst der oben erwähnten Erhöhung der Trennkraft es einseitig an den Verbindungsteilen zu hohen Belastungen kommen kann und dadurch der Verschleiss erhöht wird.

In der WO 2010/027229 A2 ist ein Matrizenteil beschrieben, das zur Verbindung mit dem aus der WO 2010/025034 A1 bekannten Patrizenteil ausgelegt ist. Das Matrizenteil weist eine Schale und ein darin einsetzbares Retentionselement mit mehreren Lamellen auf, welche im verbundenen Zustand den Kopf des Patrizenteils umschliessen. Diese Ausgestaltung hat den Nachteil, dass eine einzelne Lamelle, insbesondere bei divergierenden Implantaten, auf einen Punkt konzentriert und somit einseitig stark belastet wird, was zu einem erhöhten örtlichen Verschleiss oder sogar zu einem Bruch führen kann.

Es ist eine Aufgabe der vorliegenden Erfindung, den Verbindungssatz sowie das Patrizenteil und das Matrizenteil so zu verbessern, dass eine sichere, lösbare Verbindung ermöglicht wird, die weniger anfällig ist für Verschleiss.

Diese Aufgabe wird durch den Verbindungssatz gemäss Anspruch 1, das Patrizenteil gemäss Anspruch 9 und das Matrizenteil gemäss Anspruch 11 gelöst. Die weiteren Ansprüche geben bevorzugte Ausführungen des Verbindungssatzes sowie des Matrizen- und Patrizenteils an.

Der Verbindungssatz gemäss Anspruch 1 erlaubt eine Verbindung, bei welcher die Teile umfänglich nicht kontinuierlich aneinander liegen, sondern an beabstandet zueinander angeordneten Kontaktstellen. Dadurch wird die Belastung auf mehrere Stellen verteilt, was vorteilhaft hinsichtlich Spannungsverteilung und Verschleiss ist. Das Patrizenteil gemäss Anspruch 9 sowie das Matrizenteil gemäss Anspruch 11 erlauben es, eine Verbindung mit zueinander beabstandet angeordneten Kontaktstellen bereitzustellen.

Weitere Merkmale und deren Vorteile gehen aus den weiteren Ansprüchen sowie aus nachfolgender Beschreibung hervor.

Die Erfindung wird im Folgenden anhand von Ausführungsbeispielen unter Bezugnahme auf Figuren erläutert. Es zeigen
Fig. 1 eine Explosionsansicht eines erfindungsgemässen Verbindungssatzes mit Matrizen- und Patrizenteil gemäss einem ersten Ausführungsbeispiel;
Fig. 2 das Patrizenteil des Verbindungssatzes gemäss Fig. 1 in einer Draufsicht;
Fig. 3 das Patrizenteil im Schnitt gemäss der Linie III-III in Fig. 2;
Fig. 4 das Patrizenteil im Schnitt gemäss der Linie IV-IV in Fig. 2;
Fig. 5 das Patrizenteil im Schnitt gemäss der Linie V-V in Fig. 3;
Fig. 6 das Patrizenteil gemäss Fig. 2 in einer perspektivischen Ansicht;
Fig. 7 den Einsatz für das Matrizenteil des Verbindungssatzes gemäss Fig. 1 in einer Unteransicht;
Fig. 8 den Einsatz im Schnitt gemäss der Linie VIII-VIII in Fig. 7;
Fig. 9 den Einsatz im Schnitt gemäss der Linie IX-IX in Fig. 7;
Fig. 10 den Einsatz in einer Schnittebene gemäss der Linie X-X in Fig. 9;
Fig. 11 den Einsatz gemäss Fig. 7 in einer perspektivischen Ansicht;
Fig. 12 das Gehäuse für das Matrizenteil des Verbindungssatzes gemäss Fig. 1 in einer Unteransicht;
Fig. 13 das Gehäuse im Schnitt gemäss der Linie XIII-XIII in Fig. 12;
Fig. 14 eine Seitenansicht des Verbindungssatzes gemäss Fig. 1 im verbundenen Zustand;
Fig. 15 den verbundenen Verbindungssatz gemäss Fig. 14 in einer Draufsicht, wobei die Matrizen- und Patrizenteile durch Strichelung sowie Rasterung angedeutet sind;
Fig. 16 den Verbindungssatz im Schnitt gemäss der Linie XVI-XVI in Fig. 17;
Fig. 17 den Verbindungssatz im Schnitt gemäss der Linie XVII-XVII in Fig. 15;
Fig. 18 den Verbindungssatz in einer Schnittebene gemäss der Linie XVIII-XVIII in Fig. 15, wobei nur ein Teil des Schnittes gezeigt ist;
Fig. 19 ein zweites Ausführungsbeispiel des Einsatzes für das Matrizenteil des Verbindungssatzes gemäss Fig. 1 in einer Unteransicht;
Fig. 20 den Einsatz im Schnitt gemäss der Linie XX-XX in Fig. 19;
Fig. 21 den Einsatz im Schnitt gemäss der Linie XXI-XXI in Fig. 19;
Fig. 22 den Einsatz gemäss Fig. 19 in einer perspektivischen Ansicht;
Fig. 23 eine Explosionsansicht des Verbindungssatzes mit dem Patrizenteil gemäss Fig. 2, dem Gehäuse gemäss Fig. 12 und dem Einsatz gemäss Fig. 19;
Fig. 24 den verbundenen Verbindungssatz gemäss Fig. 23, geschnitten in einer Ebene gemäss der Linie XXIV-XXIV in Fig. 25;.
Fig. 25 den verbundenen Verbindungssatz in einer Schnittebene gemäss der Linie XXV-XXV in Fig. 24, wobei nur ein Teil des Schnittes gezeigt ist;
Fig. 26 eine Explosionsansicht eines Verbindungssatzes mit dem Patrizenteil gemäss Fig. 2, dem Gehäuse gemäss Fig. 12 und einem Einsatz gemäss einem dritten Ausführungsbeispiel;
Fig. 27 den verbundenen Verbindungssatz gemäss Fig. 26, geschnitten in einer Ebene gemäss der Linie XXVII-XXVII in Fig. 30;
Fig. 28 den verbundenen Verbindungssatz in einer Schnittebene gemäss der Linie XXVIII-XXVIII in Fig. 27, wobei nur ein Teil des Schnittes gezeigt ist;
Fig. 29 der Einsatz des Verbindungssatzes gemäss Fig. 26 in einer Unteransicht;
Fig. 30 den verbundenen Verbindungssatz gemäss Fig. 26, in einer Schnittebene gemäss der Linie XXX-XXX in Fig. 27;
Fig. 31 ein viertes Ausführungsbeispiel des Einsatzes für das Matrizenteil des Verbindungssatzes gemäss Fig. 1 in einer Unteransicht;
Fig. 32 den verbundenen Verbindungssatzes mit dem Patrizenteil gemäss Fig. 2, dem Gehäuse gemäss Fig. 12 und einem Einsatz gemäss Fig. 31, in einer Schnittebene gemäss der Linie XXXII-XXXII in Fig. 34;
Fig. 33 eine perspektivische Ansicht des Einsatzes gemäss Fig. 31;
Fig. 34 den verbundenen Verbindungssatz geschnitten in einer Ebene gemäss der Linie XXXIV-XXXIV in Fig. 32;
Fig. 35 eine Detailansicht des verbundenen Verbindungssatzes geschnitten in einer Ebene gemäss der Linie XXXV-XXXV in Fig. 34, wobei nur ein Teil des Schnittes gezeigt ist;
Fig. 36 ein fünftes Ausführungsbeispiel des Einsatzes für das Matrizenteil des Verbindungssatzes gemäss Fig. 1 in einer Unteransicht;
Fig. 37 den verbundenen Verbindungssatzes mit dem Patrizenteil gemäss Fig. 2, dem Gehäuse gemäss Fig. 12 und einem Einsatz gemäss Fig. 36, in einer Schnittebene gemäss der Linie XXXVII-XXXVII in Fig. 39;
Fig. 38 eine perspektivische Ansicht des Einsatzes gemäss Fig. 36;
Fig. 39 den verbundenen Verbindungssatz geschnitten in einer Ebene gemäss der Linie XXXIX-XXXIX in Fig. 37; und
Fig. 40 eine Detailansicht des verbundenen Verbindungssatzes geschnitten in einer Ebene gemäss der Linie XL-XL in Fig. 39, wobei nur ein Teil des Schnittes gezeigt ist.

### Erstes Ausführungsbeispiel

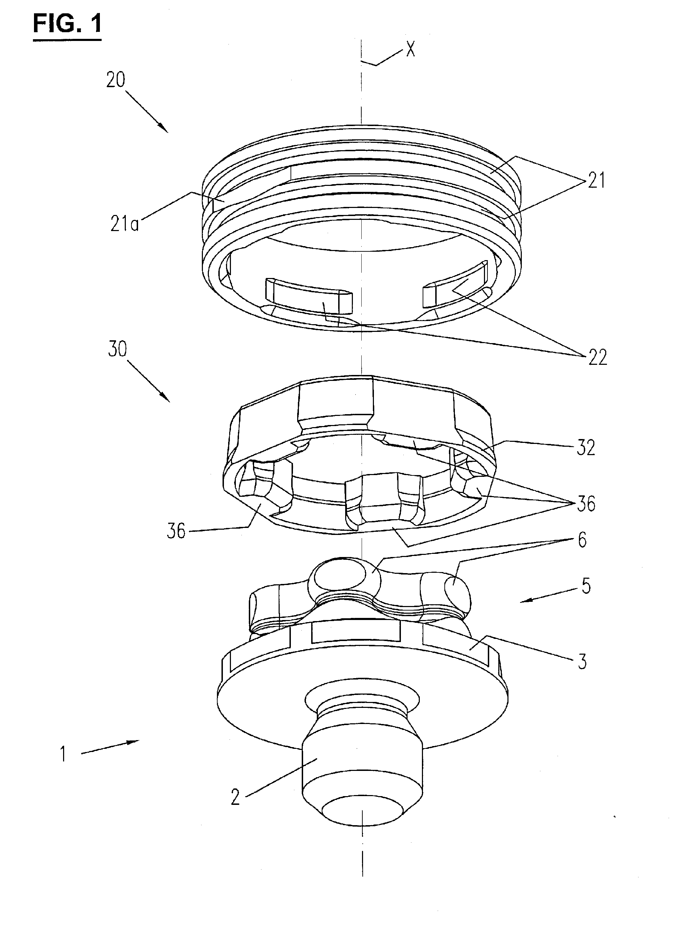

Fig. 1 zeigt zur lösbaren Befestigung eines Zahnersatzes im Mund einen Verbindungssatz, der ein Patrizenteil 1 sowie ein Matrizenteil mit einem Gehäuse 20 und einem Einsatz 30 aufweist. Die einzelnen Teile 1, 20, 30 sind in der Fig. 1 in der Axialrichtung X versetzt angeordnet dargestellt, in welche sie zum Zusammenfügen und Auseinandernehmen verschoben werden. Die Axialrichtung X ist durch die Längsachse der Teile 1, 20, 30 definiert. In der nachfolgenden Beschreibung werden Axialrichtung und Längsachse als Synonyme verwendet.

Das Patrizenteil 1 umfasst ein Befestigungsende 2 zur Befestigung im Mund sowie ein Verbindungsende 5 zur Verbindung mit dem Verbindungsbereich des Matrizenteils 20, 30. Das Befestigungsende 2 weist hier einen Zapfen mit einem Gewinde auf, welches in eine (hier nicht dargestellte) Bohrung eines Abutments, eines Implantats oder eines beispielsweise durch Fräsung hergestellten Steges einschraubbar ist. Der Rand des Patrizenteils 1 ist als Vielkant 3 ausgebildet, welcher zum Einschrauben mit einem geeigneten Werkzeug in Eingriff gebracht werden kann.

Das Befestigungsende 2 des Patrizenteils 1 ist an den entsprechenden Anwendungszweck des Verbindungssatzes anpassbar. Nebst der hier dargestellten Variante ist das Befestigungsende 2 z. B. so ausgestaltbar, dass es in schwenkbarer Weise mit einem Abutment oder einem Implantat verbindbar ist, um grössere Winkelabweichungen zwischen Implantatachse und Einschubrichtung der Zahnprothese ausgleichen zu können. Eine derartige schwenkbare Variante ist u. a. in der Anmeldung WO 2008/040134 A1 der gleichen Anmelderin beschrieben. Weiter ist es möglich, das erste Befestigungsende 2 als Implantatschraube auszubilden, so dass das ganze Patrizenteil 1 ein Implantat bildet, welches direkt im Kieferknochen anbringbar ist. Ebenfalls möglich ist eine Verwendung in der Endodontie. Dazu wird das Patrizenteil 1 z. B. in Form eines Wurzelstiftes oder Wurzelankers bereitgestellt mit jeweils einem Kopf, der dem Verbindungsende 5 entspricht. Der Teil, welcher in die Zahnwurzel eingebracht wird, kann entweder einteilig mit dem Verbindungsende 5 gefertigt sein oder mit diesem mittels in der Zahntechnik bekannten Verarbeitungsarten (Löten, Angiessen, Anlasern, Ankleben, etc.) verbindbar sein.

Das Verbindungsende 5 des Patrizenteils 1 umfasst Verbindungselemente 6, zwischen welchen am Einsatz 30 gebildete Verbindungselemente 36 einfügbar sind. Die Verbindungselemente 6 und 36 sind zur Bildung einer Verbindung ausgestaltet, welche drehfest um die Achse X ist und welche trennbar ist, indem die Verbindungselemente 36 relativ zu den Verbindungselementen 6 radial zur Achse X sowie in Richtung dieser Achse X bewegt werden. Diese Art der Verbindung wird z. B. so erreicht, dass die Verbindungselemente 6 und 36 durch Vorsprünge gebildet sind, die eine hinterschnittene Form aufweisen, und die Verbindungselemente 36 elastisch ausgestaltet sind.

Der Zahnersatz, z. B. eine Zahnprothese, ist am Gehäuse 20 befestigbar, beispielsweise durch Einpolymerisieren. Das Gehäuse 20 weist an der Aussenseite eine oder mehrere umlaufende Retentionsrillen 21 auf, welche zur Gewährleistung einer festen Verbindung zwischen Gehäuse 20 und Zahnersatz dienen. Zwischen den Retentionsrillen 21 verläuft eine Erhebung, welche hier an zwei gegenüberliegenden Seiten 21a abgeflacht ist. Durch das Vorsehen von flachen Seiten 21a ist ein rotationssicherer Halt des Gehäuses 20 gewährleistet, wenn dieses z. B. im Kunststoff einer Zahnprothese eingebracht ist. Je nach Anwendungszweck ist die Aussenseite des Gehäuses 20 auch anders gestaltbar, beispielsweise auch so, dass ein künstlicher Zahn daran befestigbar ist. An der Innenseite des Gehäuses 20 sind Aussparungen 22 vorgesehen, in welche am Einsatz 30 gebildete Halteelemente 32 einfügbar sind.

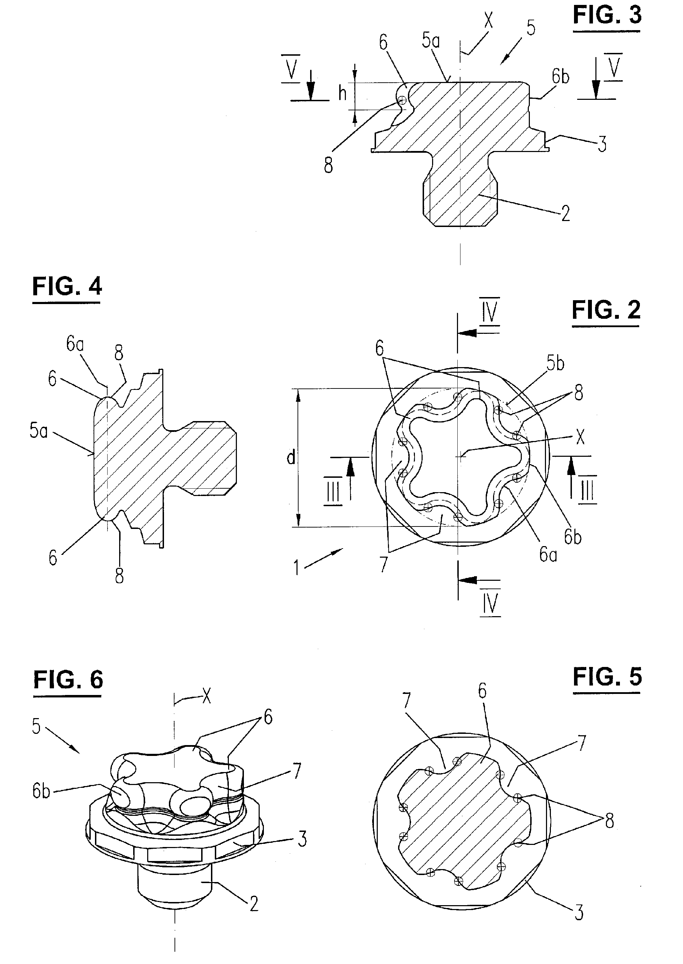

Die Ausgestaltung des Patrizenteils 1 ist in den Figuren 2 bis 6 genauer ersichtlich. Die Oberseite 5a des Verbindungsendes 5 ist geschlossen und bei der vorliegenden Ausführungsform abgeflacht ausgebildet. Die Vorsprünge 6 sind um die Längsachse des Patrizenteils 1 herum angeordnet, welche in der Richtung X verläuft. Das Verbindungsende 5 des Patrizenteils 1 weist demnach eine sternförmige Gestalt auf. Zwischen zwei benachbarten Vorsprüngen 6 ergibt sich jeweils ein Zwischenraum 7, wo die Kontaktstellen 8 mit dem Matrizenteil 30 angeordnet sind.

Die ungefähren Orte der Kontaktstellen 8 sind in den Figuren 2, 3 und 5 durch jeweils ein eingekreistes Kreuz angedeutet. Wie ersichtlich weist der jeweilige Vorsprung 6 an seinen beiden Flanken eine Kontaktstelle 8 auf.

Wie besonders in den Figuren 3 und 4 ersichtlich, weist der jeweilige Vorsprung 6 eine hinterschnittene Form auf. In Richtung von X gesehen geht somit die Form eines jeweiligen Vorsprungs 6 zuerst über einen Bereich 6a hinaus, in welchem sich die Form des Vorsprungs 6 maximal in radialer Richtung erstreckt, und ist dann wieder zur Achse X hin geformt. Dieser maximale Bereich liegt auf der in Fig. 2 angegebenen wellenförmigen Linie 6a und befindet sich auf dem in Fig. 4 angegebenen Niveau 6a. In Richtung von X gesehen befinden sich die Kontaktstellen 8 unterhalb dieses Bereiches 6a.

Die Fläche, auf welcher sich eine Kontaktstelle 8 befindet, ist in Richtung X sowie quer dazu gesehen gekrümmt ausgebildet. Wie aus Fig. 4 ersichtlich, weist der Bereich des Vorsprungs 6, in welchem sich eine Kontaktstelle 8 befindet, gesehen in einer in der Achse X liegenden Schnittebene eine nach aussen gekrümmte, d. h. konvexe Kontur auf. Diese ist rund ausgebildet.

Fig. 5 zeigt das Patrizenteil 1 in einer quer zur Achse X liegenden Schnittebene und zwar geschnitten auf dem Niveau, auf welchem sich die Kontaktstellen 8 ungefähr befinden. Wie ersichtlich weist die jeweilige Stelle des Vorsprung 6, wo sich eine Kontaktstelle 8 befindet, in diesem Schnitt eine runde Kontur auf.

Die äusseren Enden 6b der Vorsprünge 6 weisen jeweils eine abgeschnittene Form auf, so dass die Fläche 6b dort im Wesentlichen flach ist (vgl. Fig. 3). Die Höhe h eines Vorsprungs 6 ist kleiner als der Durchmesser d des Verbindungsendes 5. Der Durchmesser d ist in Fig. 2 eingezeichnet und gibt den Durchmesser des Kreises 5b ein, der so gewählt ist, dass er in der Draufsicht gesehen am Verbindungsende 5 anliegt. Vorzugsweise ist die Höhe h kleiner als d/2 und besonders bevorzugt ist h kleiner als d/3.

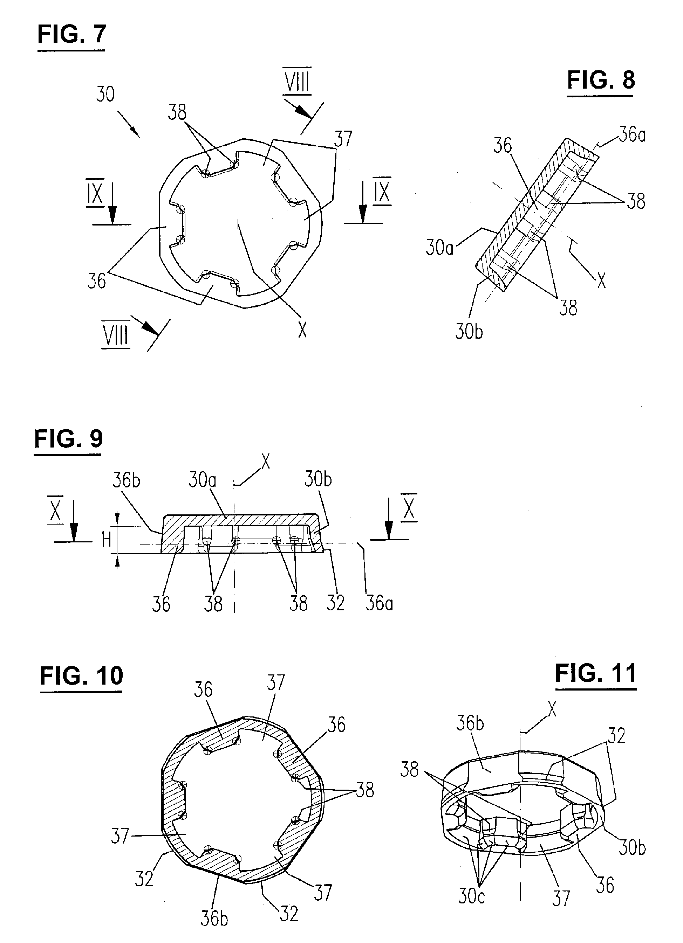

Die Ausgestaltung des Einsatzes 30 ist in den Figuren 7 bis 11 genauer ersichtlich. Der Einsatz 30 ist im Wesentlichen topfförmig ausgebildet und weist einen Deckel 30a auf, welcher eine flache Oberseite aufweist und von welchem eine umlaufende Seitenwand 30b absteht.

Verbindungselemente sind gebildet, indem die Seitenwand 30b Vorsprünge 36 in Form von Verdickungen umfasst, die nach innen zur Achse X hin gerichtet und um diese herum angeordnet sind. Zwischen den Verdickungen 36 sind Zwischenräume 37 vorhanden, in welche die Vorsprünge 6 des Patrizenteils 1 aufnehmbar sind. Die ungefähren Orte der Kontaktstellen 38, wo die Verdickungen 36 die Vorsprünge 6 kontaktieren, sind in den Figuren 7 und 9 durch jeweils ein eingekreistes Kreuz angedeutet. Wie ersichtlich weist die jeweilige Verdickung 36 an seinen beiden Flanken eine Kontaktstelle 38 auf.

Wie besonders in Fig. 8 ersichtlich, weist die jeweilige Verdickung 36 eine hinterschnittene Form auf. In Richtung von X und von der Innenseiten des Deckels 30a weg gesehen, geht die Form einer jeweiligen Verdickung 36 zuerst über einen Bereich 36a hinaus, in welchem sich die Verdickung 36 maximal in radialer Richtung nach innen erstreckt, und ist dann wieder zur Achse X hin geformt. Dieser maximale Bereich befindet sich auf dem in den Figuren 8 und 9 angegebenen Niveau 36a. In der Ansicht gemäss Fig. 9 befinden sich die Kontaktstellen 38 oberhalb dieses Bereiches 36a und sind demnach zwischen dem Niveau 36a und der Innenseite des Deckels 30a angeordnet.

Die Fläche, auf welcher sich eine Kontaktstelle 38 befindet, ist in Richtung X sowie quer dazu gesehen gekrümmt ausgebildet, wobei die Krümmung durch eine runde Kontur gegeben ist. Hier ist die Krümmung so gewählt, dass sie der Krümmung der Fläche folgt, auf welcher sich die Kontaktstelle 8 des Patrizenteils 1 befindet. Dadurch ist die Fläche des Kontaktes gegenüber einer rein punktförmigen Berührung etwas vergrössert, wodurch ein Verschleiss zusätzlich reduzierbar ist. Je nach Materialwahl ist es jedoch auch denkbar, eine eher punktförmige Kontaktierung vorzusehen, indem die Fläche der Kontaktstelle 38 und die Fläche der Kontaktstelle 8 voneinander weg gekrümmt ausgestaltet sind, wie dies z. B. bei sich zwei berührenden Kugelflächen der Fall ist.

Die Höhe H einer Verdickung 36 ist kleiner als der maximale Durchmesser d des Verbindungsendes 5. vorzugsweise ist H kleiner als d/2 und besonders bevorzugt ist H kleiner als d/3.

Wie besonders aus Fig. 11 ersichtlich, weist der Einsatz 30 am offenen Ende Flächen 30c auf, die gegenüber der Achse X geneigt sind, indem die Vorsprünge 36 sowie die Innenseite der Seitenwand 30b in den Zwischenräumen 37 endseitig abgeschrägt sind. Die geneigten Flächen 30c dienen zur Führung beim Aufsetzen des Einsatzes 30 auf das Patrizenteil 1 und erleichtern es so, die beiden Teile 1 und 30 miteinander zu verbinden.

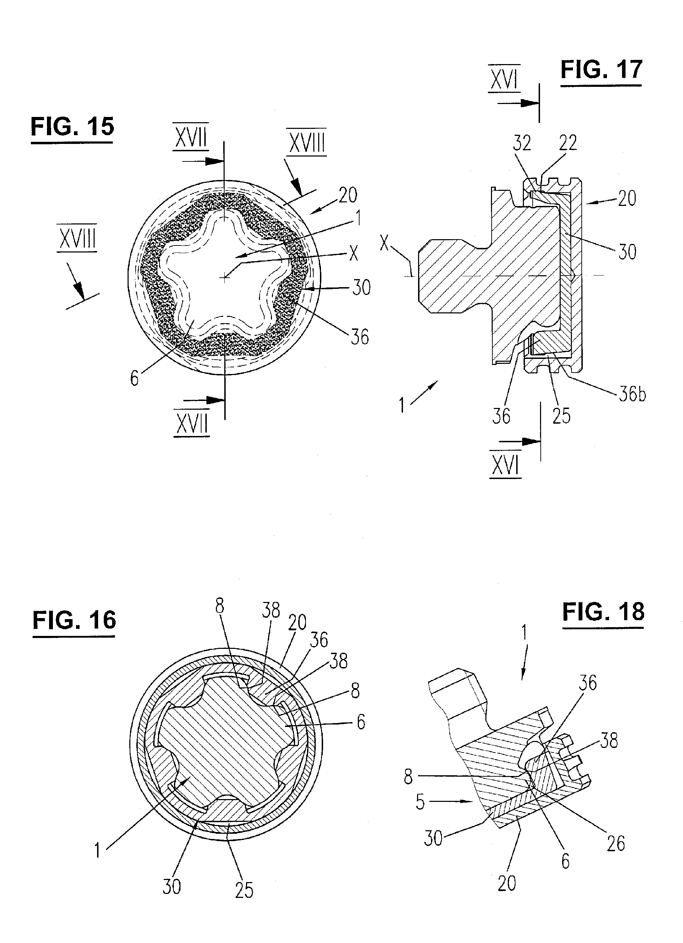

Im Bereich der Seitenwand 30b, wo sich die Zwischenräume 37 befinden, sind an der Aussenseite hervorstehende Halteelemente 32 in Form von Leisten mit abgeschrägter Fläche angeordnet (vgl. besonders Fig. 11). Im Bereich der Seitenwand 30b, wo sich die Verdickungen 36 befinden, ist die Aussenseite 36b der Seitenwand 30b in Bezug auf die Halteelemente 32 nach innen versetzt. Ist der Einsatz 30 im Gehäuse 20 eingesetzt, ergibt sich dort ein Freiraum 25 (vgl. Figuren 16 und 17).

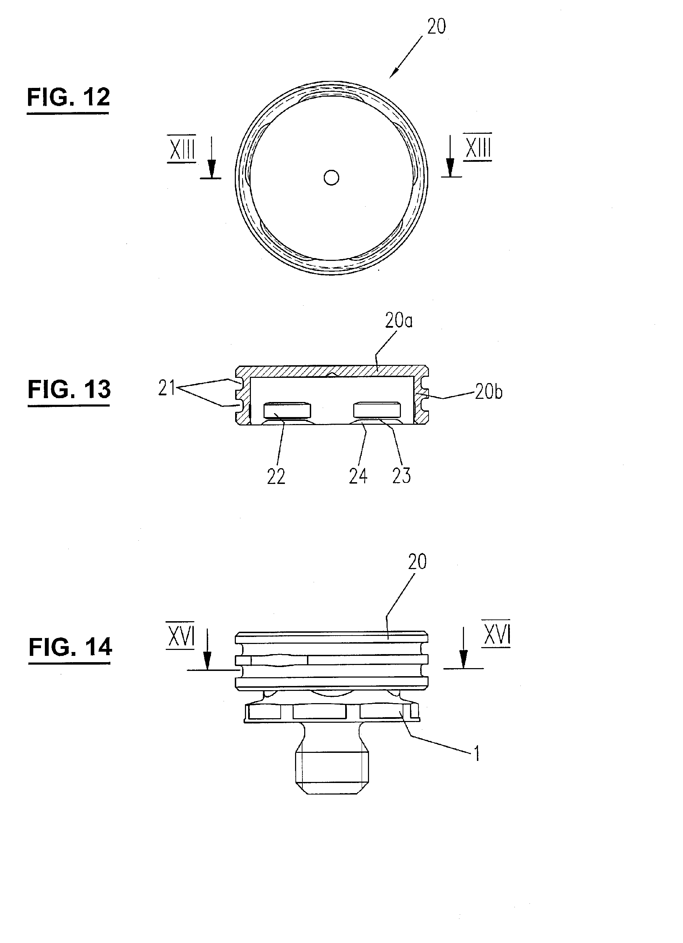

Die Ausgestaltung des Gehäuses 20 ist in den Figuren 12 und 13 genauer ersichtlich. Das Gehäuse 20 ist topfförmig ausgebildet und umfasst einen Deckel 20a, welcher eine flache Oberseite aufweist und von welchem eine umlaufende Seitenwand 20b absteht. An der Aussenseite der Seitenwand 20b sind Retentionsrillen 21 eingearbeitet. An der Innenseite der Seitenwand 20b sind Aussparungen 22 angeordnet, welche endseitig jeweils über einen Absatz 23 in eine abgeschrägte Fläche 24 übergehen. Die Fläche 24 erleichtert das Einfügen des Einsatzes 30 in das Gehäuse 20. Der jeweilige Absatz 23 dient als Anschlag für ein Halteelement 32 des Einsatzes 30.

Die Teile 1, 20, 30 sind aus mundbeständigen Materialien wie Metall oder Kunststoff gefertigt. Beispielsweise ist das Patrizenteil 1 und das Gehäuse 20 aus Metall und der Einsatz 30 aus Kunststoff.

In einer Ausführungsform sind die Verdickungen 36 am Einsatz 20 so gestaltet, dass sie eine gewisse Elastizität aufweisen und mit dem Patrizenteil 1 eine Schnappverbindung eingehen können.

Figuren 14 bis 18 zeigen den Verbindungssatz 1, 20, 30 im verbundenen Zustand, wobei Fig. 15 eine Draufsicht zeigt, bei welcher die Teile 1, 20, 30 gestrichelt und das Teil 30 zusätzlich gerastert angedeutet sind.

Zum Bereitstellen des Matrizenteils wird der Einsatz 30 in das Gehäuse 20 eingesetzt, so dass die Halteelemente 32 des Einsatzes 30 in den Aussparungen 22 des Gehäuses 20 zu liegen kommen. Wie besonders Fig. 17 zeigt, verläuft die Aussenseite 36b einer Verdickung 36 beabstandet zur Innenseite des Gehäuses 20. Es ergibt sich dadurch ein Freiraum 25, der es einer Verdickung 36 erlaubt, sich in bestimmten Grenzen in radialer Richtung nach aussen zu bewegen. Dies erleichtert das Aufsetzen des Einsatzes 20 auf das Patrizenteil 1 und ermöglicht bei der Benutzung im Mund einen gewissen Ausgleich der Belastung, die lokal unterschiedlich ausfallen kann.

Das Matrizenteil 20, 30 wird dann durch Verschieben in der Axialrichtung X auf das Patrizenteil 1 aufgesetzt. Dabei werden die Verdickungen 36 zuerst etwas radial nach aussen gedrückt, so dass sie über das Niveau 6a des Patrizenteils 1 (vgl. Figuren 2 und 4) hinwegbewegt werden können, und schnappen dann wieder in die Ausgangsstellung zurück. Die Verdickungen 36 des Matrizenteils 20, 30 greifen dann unter die Flanken der Vorsprünge 6 des Patrizenteils 1.

Wie insbesondere Fig. 18 zeigt, weisen Vorsprung 6 und Verdickung 36 keine komplementäre Form auf, sondern die Formen sind so gewählt, dass die Verdickung 36 teilweise in einem Abstand von der gegenüberliegenden Fläche des Verbindungsendes 5 verläuft. Es ergibt sich dadurch ein Freiraum 26 zwischen Verbindungsende 5 und Einsatz 30. Hier sind die Kontaktfläche des Vorsprungs 6, auf welcher die Kontaktstelle 8 liegt, sowie die diese berührende Kontaktfläche der Verdickung 36, auf welcher die Kontaktstelle 38 liegt, gekrümmt ausgebildet. Je nachdem wie diese Krümmungen gewählt sind, ergeben sich eher flächige oder eher punktförmige Kontaktstellen 8, 38.

### Zweites Ausführungsbeispiel

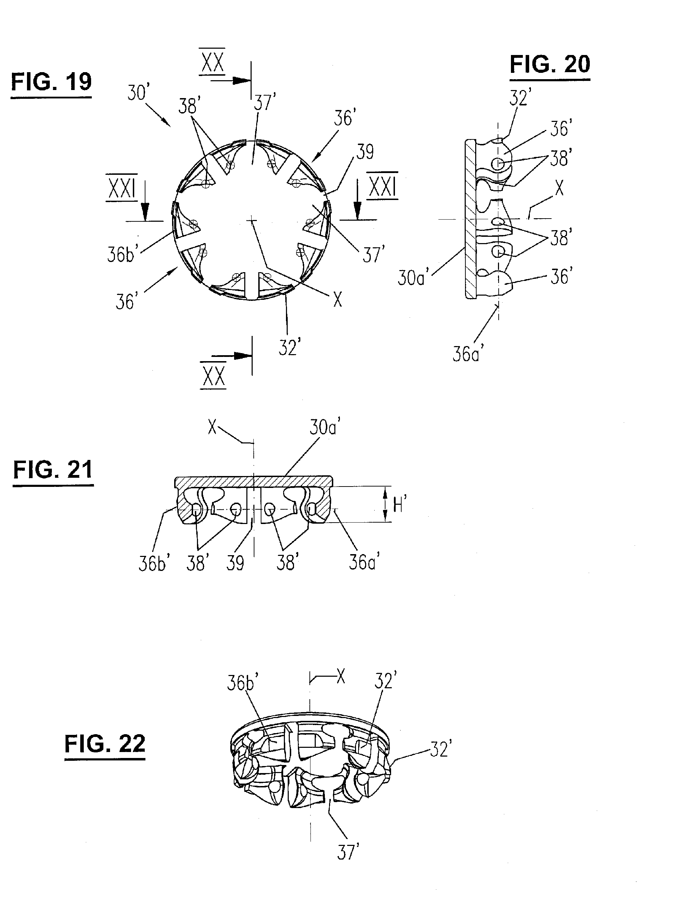

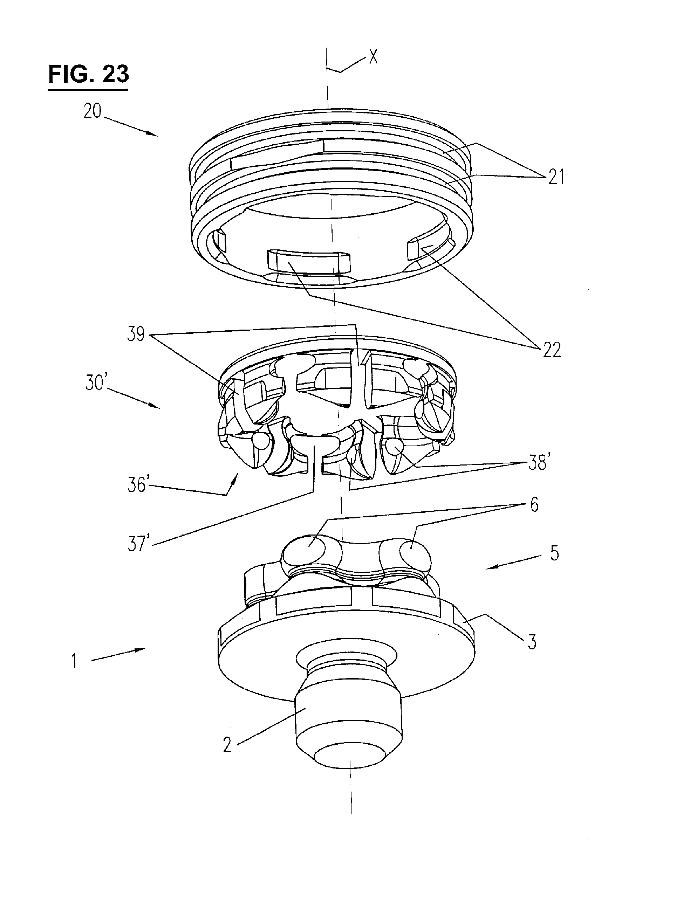

Figuren 19 bis 22 zeigen ein zweites Ausführungsbeispiel eines Einsatzes 30', welcher mit den Teilen 1, 20 verbindbar ist, wie dies in den Figuren 23 bis 25 gezeigt ist. Der Einsatz 30' weist einen Deckel 30a' auf, von welchem Vorsprünge in Form von Verdickungen 36' abgehen. Diese sind nach innen zur Achse X hin gerichtet und um diese herum angeordnet. Zwischen den Verdickungen 36' ergeben sich Zwischenräume 37', wo die Kontaktstellen 38' mit dem Patrizenteil 1 vorgesehen sind. Die ungefähren Orte der Kontaktstellen 38' sind in der Figur 19 durch eingekreiste Kreuze angedeutet. Wie ersichtlich weist die jeweilige Verdickung 36' an seinen beiden Flanken eine Kontaktstelle 38' auf.

Die jeweilige Verdickung 36' weist eine hinterschnittene Form auf. Es ergibt sich somit ein Bereich, in welchem sich die Verdickung 36' maximal in radialer Richtung nach innen erstreckt. Das Niveau, auf welchem dieser Bereich liegt, ist in den Figuren 20 und 21 durch die gestrichelte Linie 36a' angegeben. Die Kontaktstellen 38' sind ungefähr auf diesem Niveau 36a' angeordnet.

Die Fläche, auf welcher sich eine Kontaktstelle 38' befindet, ist in Richtung X sowie quer dazu gesehen rund ausgebildet. Hier ist die Fläche durch eine Delle in der Verdickung 36' gebildet. Dadurch ist der Bereich, in welchem die jeweilige Flanke einer Verdickung 36' das Patrizenteil 1 berührt gegenüber einer punktförmigen Kontaktstelle vergrössert, aber dennoch begrenzt. Durch das Vorsehen der Dellen ist gegenüber punktförmigen Kontaktstellen der Verschleiss zwischen den sich kontaktierenden Flächen zusätzlich reduzierbar.

Die Höhe H' einer Verdickung 36' ist kleiner als der maximale Durchmesser d des Patrizenteils, jedoch grösser als die Höhe h eines Vorsprungs 6 des Patrizenteils 1. Vorzugsweise ist H' kleiner als d/2 und besonders bevorzugt ist H' kleiner als d/3.

Im Unterschied zum Einsatz 30 ist hier die jeweilige Verdickung 36' in der Mitte mit einem Schlitz 39 versehen. Ist der Einsatz 30' aus Metall gefertigt, verleiht der Schlitz 39 einer Verdickung 36' zusätzliche Elastizität, um sie relativ zur Achse X bewegen und über den maximalen Bereich 6a des Patrizenteils 1 (vgl. Fig. 2) schieben zu können. Aufgrund der Schlitze 39 und der gewählten Anordnung der Kontaktstellen 8', 38' wird die jeweilige Verdickung 36' beim Aufsetzen auf das Patrizenteils 1 seitlich, d. h. quer zur radialen Richtung bewegt. Der Einsatz 30' ist u. a. aus einem Edelmetall wie Gold fertigbar.

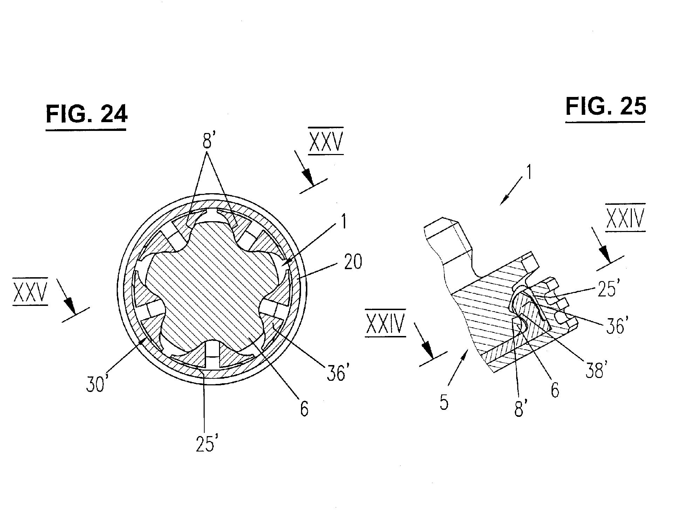

Die Aussenseite einer Verdickung 36' weist jeweils am Rand hervorstehende Halteelemente 32' in Form von Leisten mit abgeschrägter Fläche auf (vgl. besonders Figuren 20 und 22). Die sich zwischen den Halteelementen 32' befindende Aussenseite 36b' einer Verdickung 36' verläuft in Bezug auf die Halteelemente 32' nach innen versetzt. Es ergibt sich dort ein Freiraum 25' zwischen Aussenseite 36b' und Gehäuse 20, wenn die Halteelemente 32' in den Aussparungen 22 des Gehäuses 20 eingefügt sind, vgl. Figuren 24 und 25.

Wie beim ersten Ausführungsbeispiel sind die Kontaktstellen 8' und 38' zwischen Patrizenteil 1 und Matrizenteil 20, 30' beabstandet zueinander um die Achse X herum angeordnet. Die Kontaktstellen 8', 38' befinden sich hier auf oder in der Nähe des maximalen Ausdehnungsbereichs 6a des Verbindungsendes 5. Gleich wie beim ersten Ausführungsbeispiel kommt die Haltekraft, welche an den Kontaktstellen 8' und 38' erzeugt wird, aufgrund der Geometrie der Hinterschneidung zustande.

### Drittes Ausführungsbeispiel

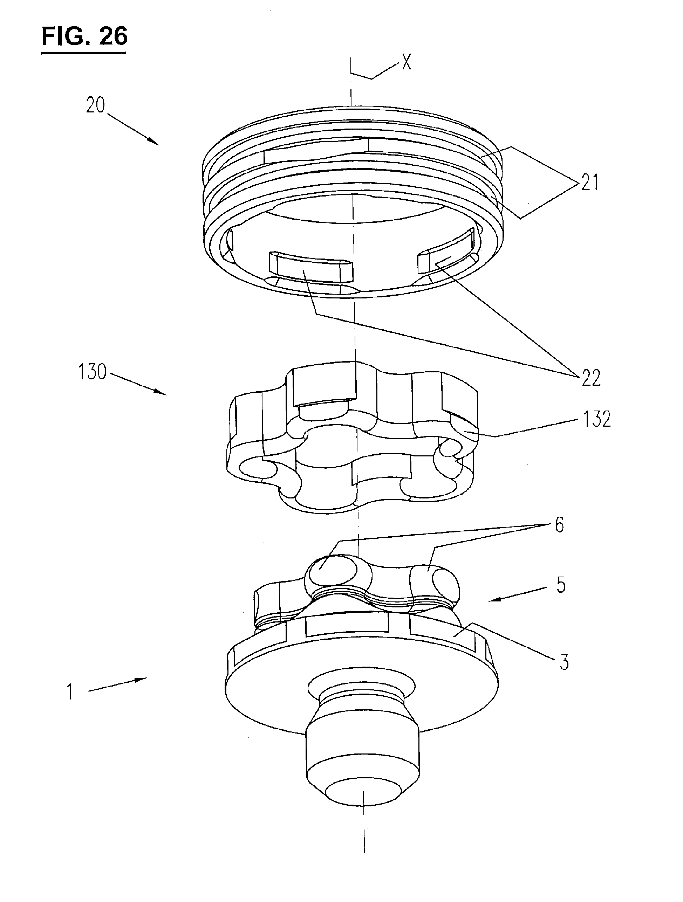

In den Figuren 26 bis 30 ist ein drittes Ausführungsbeispiel eines Einsatzes 130 gezeigt, welcher mit den Teilen 1, 20 verbindbar ist. Der Einsatz 130 weist eine Seitenwand 130b auf, die an einem Deckel 130a angebracht ist. Deckel 130a und Seitenwand 130b sind so geformt, dass in der Draufsicht gesehen Vorsprünge 136 und Zwischenräume 137 gebildet sind, die abwechselnd um die Achse X angeordnet. Es ergibt sich somit eine ähnliche sternförmige Gestalt wie beim Verbindungsende 5 des Patrizenteils 1.

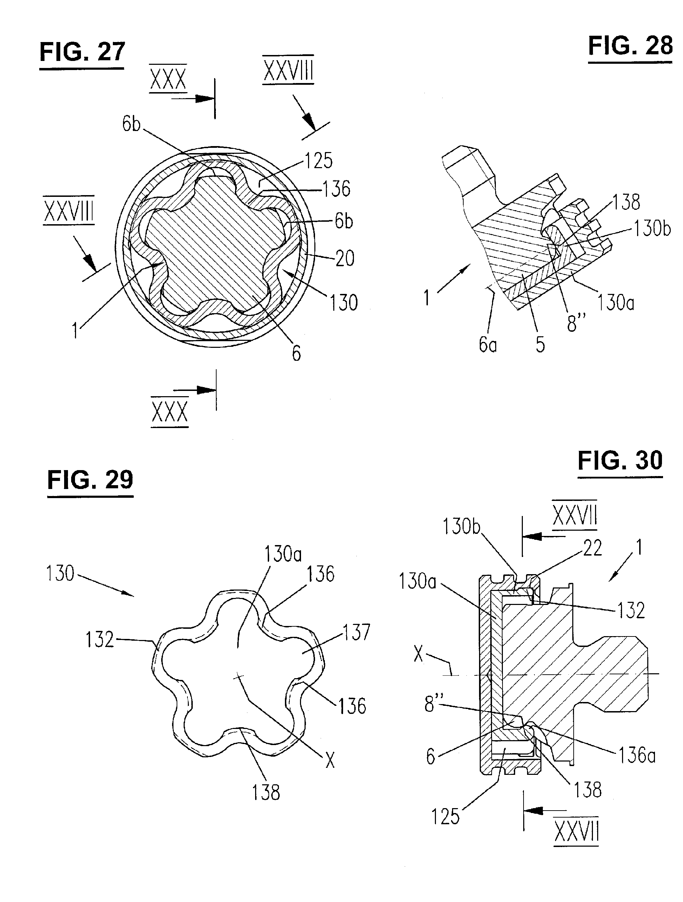

Die Vorsprünge 136 sind am offenen Ende verdickt ausgebildet, so dass sich im Querschnitt gesehen eine hinterschnittene Form ergibt (vgl. die Verdickung 136a in Fig. 30).

Die Seitenwand 130b weist aussen im Bereich der Zwischenräume 137 Halteelemente 132 auf (vgl. Figuren 26 und 29). Diese sind als Vorsprünge ausgebildet, die nach dem Einfügen in das Gehäuse 20 in dessen Aussparungen 22 greifen. Im eingefügten Zustand ist zwischen den Vorsprüngen 136 und dem Gehäuse 20 jeweils ein Freiraum 125 gegeben. Dieser ermöglicht eine Bewegung der Vorsprünge 136 in radialer Richtung. Beim Aufsetzen des Matrizenteils 20, 130 auf das Patrizenteil 1 werden die Vorsprünge 136 radial nach aussen gedrückt und die Verdickungen 136a über den maximalen Bereich 6a des Verbindungsendes 5 geschoben, bis die Verdickungen 136a unter das Verbindungsende 5 greifen. Die Vorsprünge 6 des Patrizenteils 1 werden dabei in den Zwischenräumen 137 des Einsatzes aufgenommen.

Eine Fertigung des Einsatzes 130 aus Kunststoff erleichtert einerseits das Einsetzen in das Gehäuse 20 und das Auseinanderdrücken der Vorsprünge 136 beim Aufsetzen auf das Patrizenteil 1.

Die Kontaktstellen, an welchen sich das Patrizenteil 1 und der Einsatz 130 berühren, ist in den Figuren 28 und 30 durch die Bezugszeichen 8" und 138 angedeutet. Wie aus Fig. 27 ersichtlich, erstrecken sich diese Kontaktstellen jeweils über einen längeren Bereich, der zwischen den Vorderenden 6b des Verbindungsendes 5 liegt. Es ergeben sich auch hier wie bei den vorherigen Ausführungsbeispielen Kontaktstellen, die beabstandet zueinander um die Achse X herum angeordnet sind.

### Viertes Ausführungsbeispiel

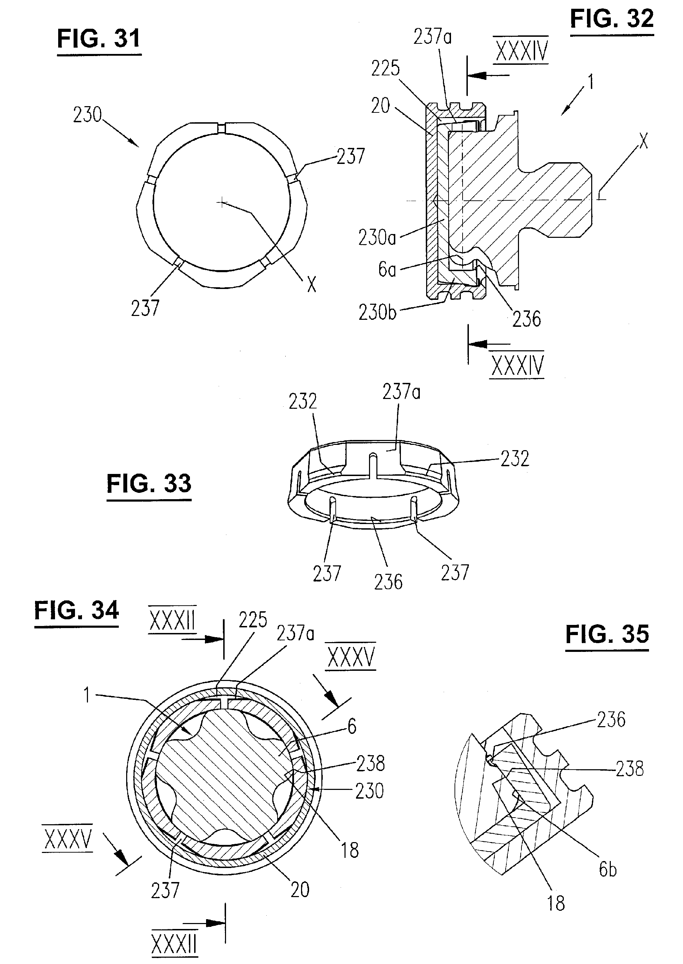

In den Figuren 31 bis 35 ist ein viertes Ausführungsbeispiel eines Einsatzes 230 gezeigt, welcher mit den Teilen 1, 20 verbindbar ist. Der Einsatz 230 weist einen Deckel 230a mit einer flachen Oberseite auf, von welchem eine umlaufende Seitenwand 230b absteht. Am freien Ende der Seitenwand 230b ist innenseitig der Verbindungsbereich des Einsatzes 230 mit dem Patrizenteil 1 angeordnet. Dieser Verbindungsbereich weist eine hinterschnittene Form auf, indem Vorsprünge 236 gebildet sind, die nach innen gerichtet sind und um die X-Achse verlaufen. Zwischen den Vorsprüngen 236 sind in der Seitenwand 230b gebildete Schlitze 237 angeordnet. Dadurch ist die Seitenwand 230b in lamellenartigen Abschnitte unterteilt. Diese Abschnitte weisen aussenseitig Halteelemente 232 auf, die ähnlich wie die Halteelemente 32 des ersten Ausführungsbeispiels des Einsatzes 30 ausgestaltet sind, indem sie Leisten mit abgeschrägter Fläche aufweisen. Zur Bildung der lamellenartigen Abschnitte kann die Seitenwand 230b auch an weiteren und/anderen Stellen geschlitzt sein als hier dargestellt. Beispielsweise können die Schlitze 237 dort vorgesehen sein, wo sich die Halteelemente 232 befinden.

Zum Bereitstellen des Matrizenteils wird der Einsatz 230 in das Gehäuse 20 eingesetzt, so dass die Halteelemente 232 des Einsatzes 230 in den Aussparungen 22 des Gehäuses 20 zu liegen kommen. Die Aussenseite 237a der Seitenwand 230b, wo die Schlitze 237 angeordnet sind, ist in Bezug auf die Halteelemente 232 nach innen versetzt angeordnet, so dass sich dort ein Freiraum 225 zwischen dem Einsatz 230 und dem Gehäuse 20 ergibt. Der Freiraum 225 erlaubt es der Seitenwand 230b, sich in bestimmten Grenzen in radialer Richtung nach aussen zu bewegen, um das Aufsetzen des Einsatzes 220 auf das Patrizenteil 1 zu erleichtern.

Das Matrizenteil aus 20 und 230 wird schliesslich durch Verschieben in der Axialrichtung X auf das Patrizenteil 1 aufgesetzt. Dabei werden die Vorsprünge 236 zuerst etwas radial nach aussen gedrückt, so dass sie über den maximalen Bereich 6a des Patrizenteils 1 hinwegbewegt werden können, und schnappen dann wieder in die Ausgangsstellung zurück. Die Vorsprünge 236 greifen dann unter die Vorderenden 6b der Vorsprünge 6 des Patrizenteils (vgl. Fig. 35).

Im Unterschied zu den drei ersten Ausführungsbeispielen kontaktieren sich hier Matrizen- und Patrizenteil an den Vorderenden 6b und nicht in den Zwischenräumen 7 der Vorsprünge 6. Es ergeben sich jedoch auch hier Kontaktstellen 18 und 238 zwischen Patrizenteil 1 und Matrizenteil 20, 230, welche voneinander beabstandet um die Achse X herum angeordnet sind und zur Erzeugung der Haltekraft dienen.

Bei diesem Ausführungsbeispiel sind keine Positionierungsmittel vorgesehen, welche die Position des Einsatzes 230 in Bezug auf das Patrizenteil 1 festlegen. Gehäuse 20 und Einsatz 230 können daher relativ zum Patrizenteil 1 um einen anderen Winkel zueinander gedreht angeordnet sein, als dies in Fig. 34 dargestellt ist. Beispielsweise kann die Anordnung auch so sein, dass sich die Schlitze 237 zwischen den Vorsprüngen 6 des Patrizenteils 1 befinden.

### Fünftes Ausführungsbeispiel

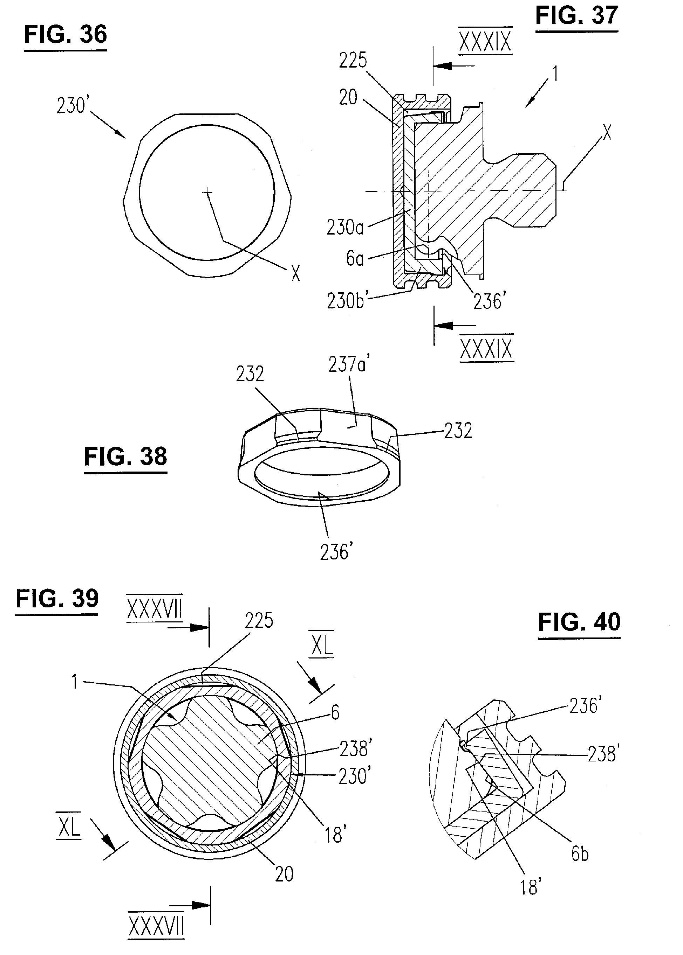

Zur Erzeugung von mehreren zueinander beabstandeten Kontaktstellen zwischen Patrizen- und Matrizenteil ist es nicht unbedingt erforderlich, dass das Matrizenteil mehrere Vorsprünge aufweist. In den Figuren 36 bis 40 ist ein fünftes Ausführungsbeispiel eines Einsatzes 230' gezeigt, welcher mit den Teilen 1, 20 verbindbar ist. Dieser Einsatz 230' unterscheidet sich im Wesentlichen vom Einsatz 230 gemäss dem vierten Ausführungsbeispiel darin, dass hier keine Schlitze 237 in der Seitenwand 230b' vorgesehen sind. Der Verbindungsbereich des Einsatzes 230' mit dem Patrizenteil 1 umfasst demnach einen einzelnen Vorsprung 236', der um die X-Achse verläuft.

Der Einsatz 230' weist ähnlich wie der Einsatz 230 Halteelemente 232 und nach innen versetzte Zwischenwände 237a' auf, welche zur Bildung des Freiraums 225 dienen zwischen Einsatz 230' und Gehäuse 30. Durch Wahl eines entsprechenden Materials ist die Seitenwand 237' derart gestaltbar, dass sie beim Aufsetzen auf das Patrizenteil 1 aufgeweitet und so der Vorsprung 236' über den maximalen Bereich 6a geschoben werden kann.

Im aufgesetzten Zustand greift der Vorsprung 236' unter die Vorderenden 6b der Vorsprünge 6 des Patrizenteils 1. Wie beim vierten Ausführungsbeispiel bilden die Vorderenden 6b der Vorsprünge 6 die Kontaktstellen 18', an welchen die Kontaktstellen 238' des Einsatzes 230' anliegen.

Es ist denkbar, den Einsatz 230' so zu gestalten, dass der Vorsprung 236' nicht bis zur Basis vom Vorsprung 6 reicht und somit näher an der Oberseite des Verbindungsendes 5 zu liegen kommt. In diesem Fall kommt die Haltekraft, mit welcher das Matrizenteil 20, 230' am Patrizenteil 1 gehalten ist, mehr durch Reibung anstelle einer Retention zustande.

Die hier beschriebene Verbindung aus Matrizen- und Patrizenteil hat u. a. den Vorteil, dass durch das Vorsehen von mehreren Kontaktstellen, welche beabstandet voneinander um die Längsachse angeordnet sind, die Belastung auf mehrere Stellen verteilbar ist. Dies verringert die lokalen Spannungen sowie den Verschleiss. An den Kontaktstellen wird die erforderliche Haltekraft Fh erzeugt, welcher den abziehenden Kräften Fa entgegenwirkt, die während der Benutzung im Mund das Matrizenteil und somit den Zahnersatz vom Patrizenteil zu trennen versuchen.

Der Verbindungsbereich zwischen Matrizen- und Patrizenteil ist so gestaltbar, dass die Haltekraft Fh bis zu einem bestimmten Grenzwert von Fa, Fmax, wirkt und dann nachlässt. Matrizen- und Patrizenteil können demnach voneinander getrennt werden, indem eine abziehende Kraft Fa aufgebracht wird, die grösser als dieser Grenzwert Fmax ist. Typischerweise ist der Grenzwert Fmax so gewählt, dass er im Bereich von 100 g bis 2000 g (entsprechend 2 bis 20 Newton) liegt, vorzugsweise im Bereich von 300 g bis 1500 g (entsprechend 3 bis 15 Newton). Weist das Matrizenteil einen auswechselbaren Einsatz auf, so können durch Vorsehen mehrerer Einsätze mit jeweils unterschiedlicher Haltekraft unterschiedliche Kräfteniveaus eingestellt werden. Es ist auch denkbar, die Haltekraft zu verändern, indem das Matrizenteil aktivierbar ausgestaltet ist. Beispielsweise kann beim zweiten Ausführungsbeispiel ein geeignetes Instrument vorgesehen sein, um die Verdickungen 36' radial etwas nach aussen oder innen zu drücken und so die Haltekraft zu verändern.

Durch das Vorsehen von mehreren Kontaktstellen zwischen Matrizen- und Patrizenteil ist das Einstellen der gewünschten Haltekraft erleichtert. Diese kann verschiedenartig erzeugt werden: Bei den Ausführungsbeispielen 1 bis 5 ist die Geometrie des Verbindungsbereich zwischen Matrizen- und Patrizenteil so gewählt, dass sich die Teile gegenseitig hintergreifen. Die Haltekraft geht daher auf eine Retention zurück. Je nach Ausgestaltung des Verbindungsbereichs zwischen Matrizen- und Patrizenteil ist es denkbar, dass die Haltekraft nicht durch Retention, sondern primär durch Reibung zustande kommt und daher auf eine Friktion zurückgeht, oder dass zur Erzeugung der Haltekraft sowohl Retention als auch Friktion wirken.

Der Betrag der erzielbaren Haltekraft Fh ist auch durch die Anzahl der Verbindungselemente am Patrizen- und/oder Matrizenteil vorgebbar sowie durch die Wahl des Winkels zwischen den Verbindungselementen. Bei den hier gezeigten Ausführungsbeispielen weist das Patrizenteil fünf Vorsprünge auf, die gleichmässig um die Achse X herum, d h. im Umfangsrichtung gesehen um den gleichen Winkel versetzt, angeordnet sind. Je nach Anwendungszweck können drei, vier oder mehr Vorsprünge vorgesehen sein und/oder es können auch unterschiedliche Winkel zwischen den Vorsprüngen gewählt werden. Entsprechend kann die Anzahl der Vorsprünge am Matrizenteil eins (wie beim Ausführungsbeispiel 5), zwei, drei oder mehr sein, wobei auch hier der Winkel zwischen den Verbindungselementen variieren kann.

Die Haltekraft Fh ist auch durch Vorsehen von Schlitzen in den Verbindungselemente einstellbar, wie dies bei den Ausführungsbeispielen 2 und 4 der Fall ist. Anzahl und Anordnung der Schlitze sind anpassbar und es können nur ein, zwei oder mehr der Verbindungselemente geschlitzt ausgestaltet sein.

Je nach Anwendungszweck der Verbindung ist die Formgebung des Verbindungsbereichs des Patrizenteils auf die Form des Verbindungsbereichs des Matrizenteils so abstimmbar, dass eine Verbindung bereitstellbar ist, die eine oder mehrere der folgenden Eigenschaften aufweist:
- Die Verbindung aus Matrizenteil und Patrizenteil ist so gestaltbar, dass dann, wenn sie nicht belastet ist, sie sich in einem möglichst spannungsfreien Zustand befindet. Dies ist z. B. bei den Ausführungsbeispielen 1, 2 und 3 der Fall.
- Das Matrizenteil ist so an das Patrizenteil anpassbar, dass es von diesem auch dann relativ mühelos getrennt werden kann, wenn es unter einem Winkel von der Längsachse weggezogen wird. Dies ist besonders bei den Ausführungsbeispielen 1, 2 und 3 der Fall.
- Die Verbindung zwischen den Matrizen- und Patrizenteil ist drehfest gestaltbar. Dies ist besonders bei den Ausführungsbeispielen 1, 2 und 3 der Fall.
- Zur Erzeugung der Haltekraft sind nicht unbedingt Schrauben erforderlich. Die Verbindung zwischen den Matrizen- und Patrizenteil ist daher schraubenlos gestaltbar.
- Die Verbindungselemente von Matrizen- und Patrizenteil sind so gestaltbar, dass im verbundenen Zustand jeweils ein Verbindungselement des Patrizenteils mindestens zwei Verbindungselemente des Matrizenteils berührt. Dies ist bei den Ausführungsbeispielen 1 bis 4 der Fall.
- Insbesondere das Patrizenteil kann frei von Vertiefungen gestaltet werden, die schwer zu reinigen sind.
- Eine kompakte Verbindung mit geringer Aufbauhöhe ist bereitstellbar.

Aus der vorangehenden Beschreibung sind dem Fachmann zahlreiche Abwandlungen zugänglich, ohne den Schutzbereich der Erfindung zu verlassen, der durch die Ansprüche definiert ist.

Bei den in den Figuren gezeigten Beispielen ist das Matrizenteil zweiteilig ausgebildet. Es ist auch möglich, das Matrizenteil einteilig auszubilden, indem Gehäuse und Einsatz als einziges Teil ausgebildet sind, oder das Matrizenteil aus mehr als zwei Teilen auszugestalten.

Anstelle des Verbindungsbereichs an der Matrize oder ergänzend dazu können auch eine oder mehrere der vorsprünge 6 am Patrizenteil 1 relativ zur Längsachse X radial bewegbar ausgebildet sein, indem sie beispielsweise eine bestimmte Elastizität aufweisen.

## Patentansprüche

1. Verbindungssatz zur lösbaren Befestigung eines abnehmbaren Zahnersatzes in einem Mund, umfassend
ein im Mund anbringbares Patrizenteil (1) mit einer Längsachse (X) und
ein am Zahnersatz befestigbares Matrizenteil (20, 30, 30', 130, 230, 230'), welches durch Verschieben in Richtung der Längsachse über einen Verbindungsbereich mit dem Patrizenteil verbindbar ist, **dadurch gekennzeichnet, dass**
das Patrizenteil (1) um die Längsachse (X) herum angeordnete Verbindungselemente (6) aufweist, wobei sich im verbundenen Zustand die Verbindungselemente (6) des Patrizenteils (1) und der Verbindungsbereich (36, 36', 136, 236, 236') des Matrizenteils (20, 30, 30', 130, 230, 230') an Kontaktstellen (8, 38; 8', 38'; 8", 138; 18, 238; 18', 238') berühren, welche voneinander beabstandet um die Längsachse (X) herum angeordnet sind und welche derart ausgestaltet sind, dass eine Haltekraft erzeugbar ist, die einem Trennen des Matrizenteils vom Patrizenteil entgegenwirkt.

2. Verbindungssatz nach Anspruch 1, wobei die Verbindungselemente des Patrizenteils (1) als Vorsprünge (6) ausgebildet sind, wobei vorzugsweise die jeweilige Fläche des Vorsprungs, auf welcher sich eine Kontaktstelle (8, 8', 8", 18, 18') befindet, eine hinterschnittene Form aufweist.

3. Verbindungssatz nach einem der vorangehenden Ansprüche, wobei der Verbindungsbereich (36, 36', 136, 236, 236') des Matrizenteils (20, 30, 30', 130, 230, 230') zumindest teilweise relativ zur Längsachse (X) radial bewegbar ist, vorzugsweise ist der Verbindungsbereich (36, 36', 136, 236, 236') zumindest teilweise elastisch ausgebildet.

4. Verbindungssatz nach einem der vorangehenden Ansprüche, wobei in der Längsachse (X) gesehen die Verbindungselemente (6) innerhalb eines Kreises (5b) mit einem Aussendurchmesser liegen und der Verbindungsbereich (36, 36', 136, 236, 236') des Matrizenteils (20, 30, 30', 130, 230, 230') ausserhalb eines Innendurchmesser liegen, wobei der Innendurchmesser grösser ist als der Aussendurchmesser.

5. Verbindungssatz nach einem der vorangehenden Ansprüche, wobei der Verbindungsbereich des Matrizenteils (20, 30, 30', 130, 230, 230') mehrere Vorsprünge (36, 36', 136, 236) umfasst, die um die Längsachse (X) herum angeordnet sind, oder einen kontinuierlich um die Längsachse (X) verlaufenden Vorsprung (236').

6. Verbindungssatz nach einem der vorangehenden Ansprüche, wobei die Verbindungselemente (6) und der Verbindungsbereich (36, 36', 136, 236, 236') gekrümmte Kontaktflächen umfassen, auf welchen die Kontaktstellen (8, 38; 8', 38'; 8", 138; 18, 238; 18', 238') liegen,
vorzugsweise ist die jeweilige Kontaktfläche gesehen in der Längsachse (X) sowie gesehen quer dazu gekrümmt ausgebildet.

7. Verbindungssatz nach einem der vorangehenden Ansprüche, wobei das Matrizenteil ein Gehäuse (20) und einen Einsatz (30, 30', 130, 230, 230') aufweist, an welchem der Verbindungsbereich (36, 36', 136, 236, 236') gebildet ist, wobei vorzugsweise Gehäuse (20) und Einsatz (30, 30', 130, 230, 230') aus unterschiedlichen Materialien gefertigt sind.

8. Verbindungssatz nach Anspruch 7, wobei nach Einsetzen des Einsatzes (30, 30', 130, 230, 230') in das Gehäuse (20) zwischen der Innenwandung des Gehäuses (20) und der gegenüberliegenden Wandung des Verbindungsbereichs (36, 36', 136, 236, 236') mindestens ein Freiraum (25, 25', 125, 225) vorhanden ist.

9. Patrizenteil zur lösbaren Befestigung eines abnehmbaren Zahnersatzes, welches an einem Implantat, Wurzelstift oder Wurzelanker oder direkt in einem Knochen oder einer Zahnwurzel anbringbar und mit einem am Zahnersatz befestigbaren Matrizenteil (20, 30, 30', 130, 230, 230') verbindbar ist,
**dadurch gekennzeichnet, dass** das Patrizenteil (1) um seine Längsachse (X) herum angeordnete Vorsprünge (6) aufweist zur Erzeugung einer Haltekraft, die einem Trennen des mit dem Patrizenteil verbundenen Matrizenteils (20, 30, 30', 130, 230, 230') entgegenwirkt.

10. Patrizenteil nach Anspruch 9, wobei der jeweilige Vorsprung (6) eine hinterschnittene Form und/oder zur Bildung von Kontaktstellen (8, 8', 8", 18, 18') mit dem Matrizenteil (20, 30, 30', 130, 230, 230') Kontaktflächen aufweist, welche gekrümmt sind.

11. Matrizenteil zur lösbaren Befestigung eines abnehmbaren Zahnersatzes in einem Mund, wobei das am Zahnersatz befestigbare Matrizenteil (20, 30, 30', 130) mit einem Patrizenteil (1) verbindbar ist, welches Verbindungselemente der ersten Art (6) aufweist, und wobei
das Matrizenteil (20, 30, 30', 130) Verbindungselemente der zweiten Art (36, 36', 136) und Zwischenräume (37, 37', 137) aufweist, die abwechselnd um die Längsachse (X) des Matrizenteils herum angeordnet sind,
**dadurch gekennzeichnet, dass**
zur Bildung von Kontaktstellen (8, 8', 8") im dem jeweiligen Zwischenraum (37, 37', 137) ein Verbindungselement der ersten Art (6) aufnehmbar ist.

12. Matrizenteil nach Anspruch 11, wobei die Verbindungselemente der zweiten Art als Vorsprünge (36, 36', 136) ausgebildet sind, welche vorzugsweise eine hinterschnittene Form aufweisen.

13. Matrizenteil nach einem der Ansprüche 11 bis 12, wobei das jeweilige Verbindungselement der zweiten Art (36, 36', 136) relativ zur Längsachse (X) radial bewegbar und/oder in der Längsachse (X) geschlitzt (39) ausgebildet ist.

14. Matrizenteil nach einem der Ansprüche 11 bis 13, welches ein Gehäuse (20) und einen Einsatz (30, 30', 130) aufweist, an welchem die Verbindungselemente der zweiten Art (36, 36', 136) gebildet sind.

15. Matrizenteil nach Anspruch 14, wobei Gehäuse (20) und Einsatz (30, 30', 130) aus unterschiedlichen Materialien, z. B. Metall für das Gehäuse (20) und Kunststoff für den Einsatz (30, 30', 130) gefertigt sind, und/oder der Einsatz (30, 30', 130) aus Kunststoff oder Metall, insbesondere Edelmetall, gefertigt ist.

16. Matrizenteil nach einem der Ansprüche 11 bis 15, wobei nach Einsetzen des Einsatzes (30, 30', 130) in das Gehäuse (20) zwischen der Innenwandung des Gehäuses (20) und einem jeweiligen Verbindungselement der zweiten Art (36, 36', 136) ein Freiraum (25, 25', 125) vorhanden ist.

17. Verbindungssatz zur lösbaren Befestigung eines Zahnersatzes in einem Mund,
mit mindestens einem Patrizenteil nach einem der Ansprüche 9 bis 10 und
mit mindestens einem Matrizenteil nach einem der Ansprüche 11 bis 16.
